# EUROPEAN PATENT APPLICATION

(11) **EP 4 219 325 A1**
(43) Date of publication of application: **02.08.2023**
(21) Application number: 22215998.0
(22) Date of filing: 22.12.2022
(51) Int. Cl.: B65C 1/02, B65C 9/18, B25J 15/06, B65C 9/36

(54) **MULTI-HOLE ABSORPTION TOOL**

(30) Priority: 21.01.2022 JP 2022008065
(71) Applicant: OMRON Corporation, Kyoto 600-8530 (JP)
(72) Inventor: NING, Xiaoguang, Kyoto-shi, 600-8530 (JP); TSUCHIHASHI, Yuki, Kyoto-shi, 600-8530 (JP); MURAI, Masahiro, Kyoto-shi, 600-8530 (JP); KANZAWA, Takayuki, Kyoto-shi, 600-8530 (JP)
(74) Representative: Mewburn Ellis LLP

(57) **Abstract**

A multi-hole absorption tool (110) includes an absorption surface (111) including a plurality of absorption holes (h1) to which a seal (S) is absorbed. Each of the plurality of absorption holes (h1) is classified so as to belong to at least one of a first region (SE1) and a second region (SE2), and absorption holes (h1) belonging to the first region (SE1) and absorption holes (h1) belonging to the second region (SE2) are connected to different suction devices (600). The multi-hole absorption tool (110) having this configuration can peel off the seal from a mount with no wrinkle in the seal, prevent positional displacement of the seal with respect to an object to which the seal is affixed, and affix the seal to the object.

## Description

### BACKGROUND OF THE INVENTION

### Field of the Invention

The present technique relates to, for example, a multi-hole absorption tool adopted for a multi-hole absorption end effector mounted on a robot arm of a seal affixing system.

### Description of the Background Art

Japanese Patent Laying-Open No. 2009-154946, Japanese Patent Laying-Open No. 2012-197095, and the like disclose a technique related to an absorption hand or the like peeling off a seal from a mount.

### SUMMARY OF INVENTION

When the seal peeled off from the mount is absorbed by an absorption device, sometimes the seal is wrinkled or positional displacement of a position and an angle of the seal during the affixing is generated due to warpage of the seal itself and suction during the absorption.

A purpose of the present technique is to provide a multi-hole absorption tool capable of peeling off the seal from the mount without wrinkling the seal, preventing the positional displacement of the seal with respect to an object to which the seal is affixed, and affixing the seal to the object.

A multi-hole absorption tool according to the present technique includes an absorption surface including a plurality of absorption holes to which a seal is absorbed, in which each of the plurality of absorption holes is classified so as to belong to at least one of a first region and a second region, and absorption holes belonging to the first region and absorption holes belonging to the second region are connected to different suction devices. According to this configuration, on and off of the absorption can be switched for each region. As a result, the absorption of seals having various shapes can be coped with.

An opening of a part of the plurality of absorption holes is capable of being closed. According to this configuration, the absorption hole that should not absorb the seal can be closed according to the shape of the special seal. This makes it possible to further cope with the absorption of the seals having various shapes.

The multi-hole absorption tool further includes a pressing roller disposed near the absorption surface, the pressing roller being configured to press the seal to affix the seal to an object when the seal absorbed by the absorption surface is affixed to the object. According to this configuration, the seal is affixed to the surface of the affixing object while pressed by the pressing roller, so that the generation of the wrinkle is prevented and the seal is affixed to the affixing object.

The pressing roller is provided so as to protrude from the absorption surface by a predetermined distance. According to this configuration, the seal is affixed to the surface of the affixing object by the pressing roller, so that the generation of the wrinkle is prevented and the seal is affixed to the affixing object.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view illustrating an overall configuration of a seal affixing system according to an embodiment.
Fig. 2 is a first perspective view illustrating a multi-hole absorption end effector used in the seal affixing system of the embodiment.
Fig. 3 is a second perspective view illustrating the multi-hole absorption end effector used in the seal affixing system of the embodiment.
Fig. 4 is a side view illustrating the multi-hole absorption end effector used in the seal affixing system of the embodiment.
Fig. 5 is a view illustrating an absorption surface and a first classification of a multi-hole absorption tool of the embodiment.
Fig. 6 is a view illustrating a state in which a first seal is absorbed to the absorption surface in a first classification mode.
Fig. 7 is a view illustrating a state in which a second seal is absorbed to the absorption surface in a first classification mode.
Fig. 8 is a view illustrating a state in which a third seal is absorbed to the absorption surface in the first classification mode.
Fig. 9 is a view illustrating a state in which a fourth seal is absorbed to the absorption surface in the first classification mode.
Fig. 10 is a view illustrating an operation of each vacuum ejector adapted to a shape of a seal in the first classification mode.
Fig. 11 is a view illustrating a second classification mode of the absorption surface of the multi-hole absorption tool of the embodiment.
Fig. 12 is a view illustrating a state in which the first seal is absorbed to the absorption surface in the second classification mode.
Fig. 13 is a view illustrating a state in which the second seal is absorbed to the absorption surface in the second classification mode.
Fig. 14 is a view illustrating a state in which the fourth seal is absorbed to the absorption surface in the second classification mode.
Fig. 15 is a view illustrating the operation of each vacuum ejector adapted to the shape of the seal in the second classification mode.
Fig. 16 is a view illustrating arrangement of absorption holes according to another embodiment.
Fig. 17 is a view illustrating a first affixing process of affixing the seal to an object using the multi-hole absorption end effector of the embodiment.
Fig. 18 is a view illustrating a second affixing process of affixing the seal to the object using the multi-hole absorption end effector of the embodiment.
Fig. 19 is a view illustrating a third attaching process of affixing the seal to the object using the multi-hole absorption end effector of the embodiment.
Fig. 20 is a view illustrating a fourth attaching process of affixing the seal to the object using the multi-hole absorption end effector of the embodiment.

### DESCRIPTION OF THE PREFERRED EMBODIMENT

Hereinafter, an embodiment of the present technique will be described. The same or corresponding component is denoted by the same reference numeral, and sometimes the overlapping description will be omitted.

In each embodiment described below, when the number, amount, and the like are referred to, the scope of the present technique is not necessarily limited to the number, amount, and the like unless otherwise specified. Furthermore, in the following embodiment, each constituent element is not necessarily essential to the present technique unless otherwise specified.

In the present specification, the descriptions of "comprise" and "include" and "have" are in an open-ended format. That is, when a certain configuration is included, a configuration other than the certain configuration may be included or not be included. In addition, the present technique is not necessarily limited to one that exhibits all the functions and effects mentioned in the embodiment.

### <A. Application example>

An example of a scene to which the present technique is applied will be described. In the present specification, as a typical example, a multi-hole absorption tool adopted for a multi-hole absorption end effector mounted on a robot arm of a seal affixing system will be described, but the multi-hole absorption tool is not limited to the multi-hole absorption end effector mounted on the robot arm of the seal affixing system.

### <B. Seal affixing system 1>

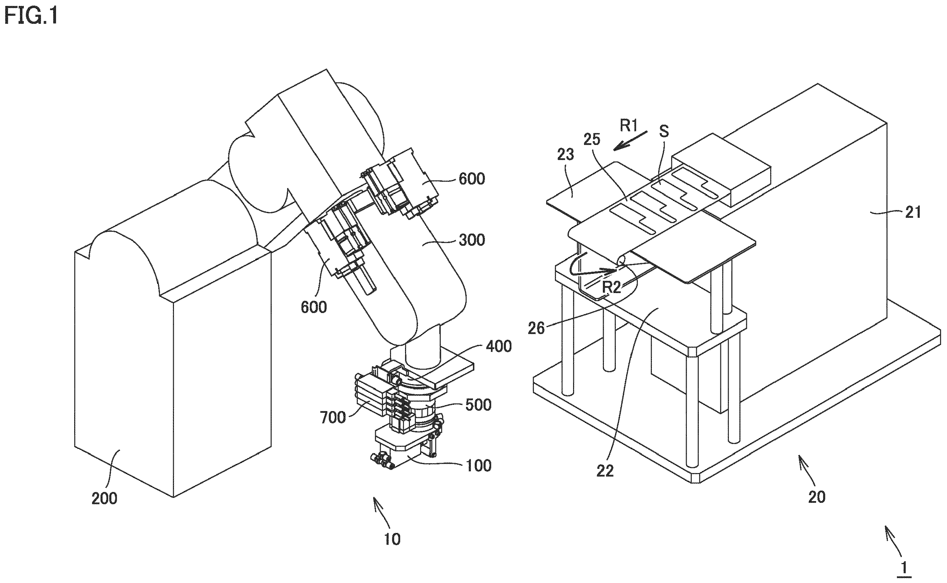

With reference to Fig. 1, an outline of a seal affixing system 1 of the embodiment will be described. Fig. 1 is a view illustrating an overall configuration of seal affixing system 1. Seal affixing system 1 roughly includes a robot arm mechanism 10 and a seal feeder 20.

Robot arm mechanism 10 includes a body device 200, a robot arm 300, a force sensor 400, a tool changer 500, a multi-hole absorption end effector 100, a vacuum ejector 600 as a vacuum device, and a flow rate regulator (vacuum pressure meter) 700.

Robot arm 300 is a vertical articulated six-axis, and can perform positioning control of tool changer 500 attached to a distal end of robot arm 300 at a three-dimensional position. As described later, a plurality of absorption holes absorbing a seal are provided in multi-hole absorption end effector 100, and vacuum ejector 600 and flow rate regulator 700 are coupled to the corresponding absorption holes by an air pipe (not illustrated). A hole diameter of an absorption hole h1 is preferably about 2 mm to about 4 mm. Flow rate adjuster 700 adjusts a flow rate of each absorption hole generated by vacuum ejector 600 (at the time of affixing the seal) to such an extent that adhesive force of the seal exceeds the flow rate.

Seal feeder 20 includes a body device 21 internally including a drive mechanism, a seal feeding amount detector controller, and a signal converter, a support base 22, and a seal pickup extension base 23. When seal feeder 20 itself has a sufficiently long region picking up the seal, seal pickup extension base 23 may not be provided.

A seal S is sent out onto seal pickup extension base 23 (direction of an arrow R1 in Fig. 1) while affixed to a seal mount 25, and sequentially pulled away from seal mount 25 by multi-hole absorption end effector 100 controlled in synchronization with seal feeding. Multi-hole absorption end effector 100 translates while absorbing seal S on seal mount 25, thereby peeling off seal S from seal mount 25 without generating a wrinkle in seal S.

Thereafter, seal S is affixed to the seal affixing target object using robot arm 300. The feeding direction of the mount from which seal S is pulled is reversed by a reverse roller 26 (direction of an arrow R2 in Fig. 1), and the mount is wound around a roller (not illustrated) of body device 21.

In seal affixing system 1 having the above configuration, the control of each of robot arm 300, force sensor 400, tool changer 500, multi-hole absorption end effector 100, vacuum ejector 600, flow rate regulator 700, the seal feed amount detector controller of seal feeder 20, and the signal converter is performed by a robot integrated controller (not illustrated).

### <C. Multi-hole absorption end effector 100>

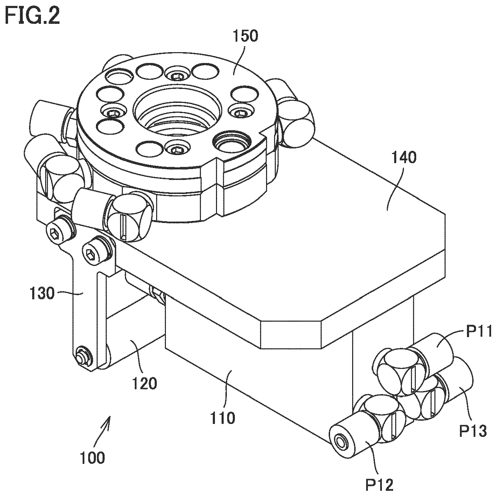

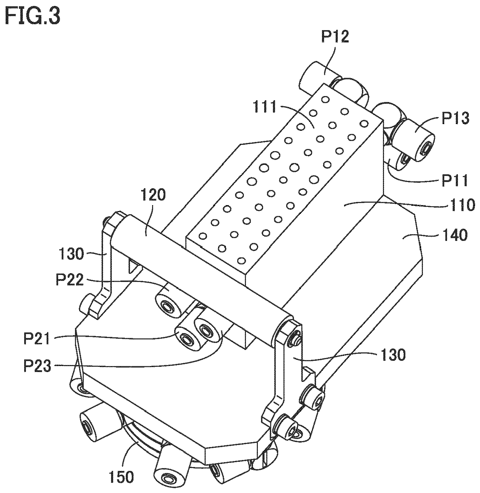

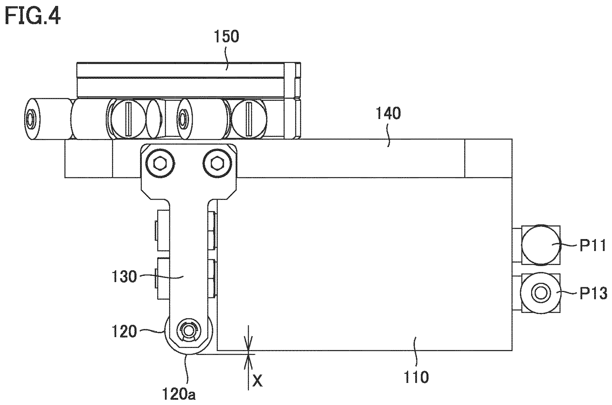

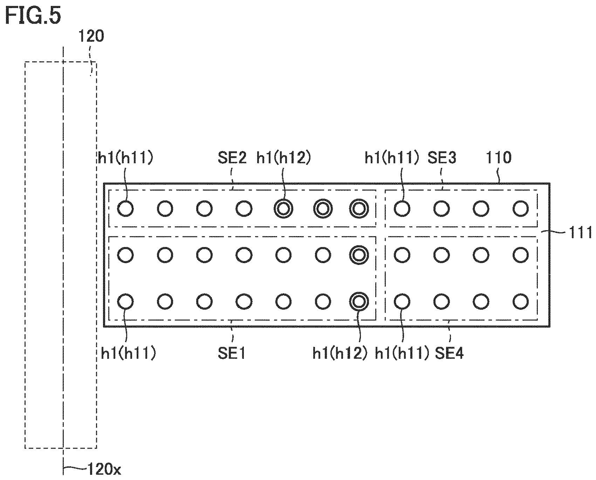

With reference to Figs. 2 to 5, a configuration of multi-hole absorption end effector 100 will be described below. Figs. 2 and 3 are first and second perspective views of multi-hole absorption end effector 100, Fig. 4 is a side view of multi-hole absorption end effector 100, and Fig. 5 is a view illustrating absorption surface 111 and a first classification of a multi-hole absorption tool 110 provided in multi-hole absorption end effector 100.

Referring to Figs. 2 to 4, multi-hole absorption end effector 100 includes multi-hole absorption tool 110, a pressing roller 120, a pressing roller support plate 130, a body plate 140, and a coupling portion 150. Coupling portion 150 is provided on one surface side (an upper side in the drawing) of body plate 140, and multi-hole absorption tool 110 is provided on the other surface side (a lower side in the drawing) of body plate 140. A pair of pressing roller support plates 130 extending on the side of multi-hole absorption tool 110 is provided on a side surface of body plate 140, and pressing roller 120 is rotatably and axially supported by the pair of pressing roller support plates 130. Suction ports P11, P12, P13, P21, P22, P23 communicating with absorption holes described later are provided on the side surface of multi-hole absorption tool 110.

As described above, multi-hole absorption end effector 100 includes pressing roller 120 in a vicinity of absorption surface 111 of multi-hole absorption tool 110. When absorption surface 111 is parallel to seal mount 25 of seal S, pressing roller 120 slightly protrudes from absorption surface 111 toward seal mount 25 of seal S.

Referring to Fig. 4, when multi-hole absorption end effector 100 is viewed from the side view, a side surface 120a of pressing roller 120 protrudes from absorption surface 111 of multi-hole absorption tool 110 by a predetermined distance (a distance X in the drawing). Distance X is preferably about 0.1 mm to about 0.5 mm.

Although this configuration is not essential, pressing roller 120 can press an end of seal S slightly protruding from absorption surface 111 against the affixing object during the affixing of seal S. Because seal S is further pressed against the surface of the affixing object by pressing roller 120, the generation of the wrinkle is further prevented, and the seal is affixed to the affixing object. On the other hand, when absorption surface 111 protrudes toward the mount side from pressing roller 120, the end of seal S needs to protrude toward the side of pressing roller 120 by a longer amount during affixing of seal S, which causes the wrinkle.

Furthermore, pressing roller 120 may have a longer width than absorption surface 111. Thus, seal S having the longer width can also be affixed. The absorption itself by absorption surface 111 of seal S may not be the same as the width of seal S.

### <D. Absorption hole h1 provided on absorption surface 111>

With reference to Fig. 5, absorption hole h1 provided on absorption surface 111 of multi-hole absorption tool 110 will be described. In the embodiment, two kinds of absorption holes h1 are included. An absorption hole h11 is a hole that is always opened, and an absorption hole h12 is configured to be able to close its opening. In the embodiment, a female screw (tap prepared hole) is provided on an inner peripheral surface of absorption hole h12, and absorption hole h12 can be closed by a tap bolt (not illustrated). With this configuration, absorption hole h12 that does not require the absorption can be selectively closed according to the shape of the seal.

Furthermore, in the embodiment, absorption hole h1 is classified into four regions of a first region (SE1), a second region (SE2), a third region (SE3), and a fourth region (SE4). Absorption holes h1 belonging to the respective regions are coupled to the same suction port, and suction force can be controlled by the same vacuum ejector 600 and flow rate regulator 700.

Absorption surface 111 of multi-hole absorption tool 110 of the embodiment has a rectangular shape in a direction orthogonal to a rotation shaft 120x when rotation shaft 120x of pressing roller 120 is set as a reference. In absorption surface 111, 11 holes are provided along a longitudinal direction of absorption surface 111, 3 holes are provided along a short direction, a 3 × 11 type matrix is configured, and a total of 33 absorption holes h1 are provided. In the embodiment, these 33 absorption holes h1 are classified as follows as a first classification mode.

First region SE1 is configured in (2 × 7) from a first column to a seventh column from the left in a second row and a third row, and first vacuum ejector 600 is coupled to 14 absorption holes h1 belonging to first region SE1 through suction port P21 and suction port P23. In first region SE1, absorption hole h12 in which the female screw (tap prepared hole) is provided is made at two positions in the seventh column.

Second region SE2 is formed in (1 × 7) from the first column to the seventh column from the left in the first row, and second vacuum ejector 600 is coupled to seven absorption holes h1 belonging to second region SE2 through suction port P22. In second region SE2, absorption holes h12 in which the female screw (tap prepared hole) is provided is made at three positions from the fifth row to the seventh row.

Third region SE3 is formed (1 × 4) in an eighth column to an eleventh column from the left in the first row, and third vacuum ejector 600 is coupled to four absorption holes h1 belonging to third region SE3 through suction port P12.

Fourth region SE4 is formed (2 × 4) in the eighth column to the eleventh column from the left in the second and third rows, and fourth vacuum ejector 600 is coupled to eight absorption holes h1 belonging to fourth region SE4 through suction port P11 and suction port P13.

### <E. Absorption state of seal: first classification mode>

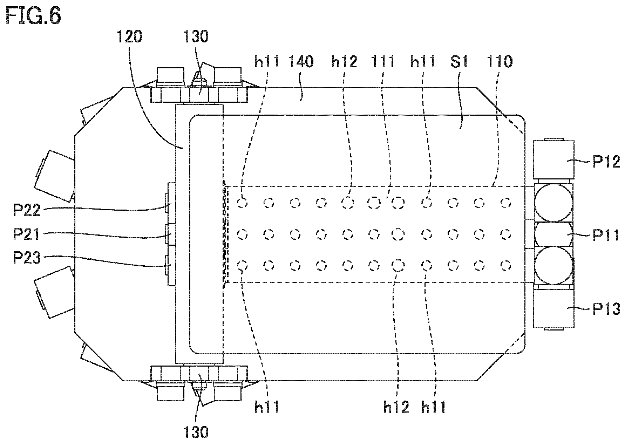

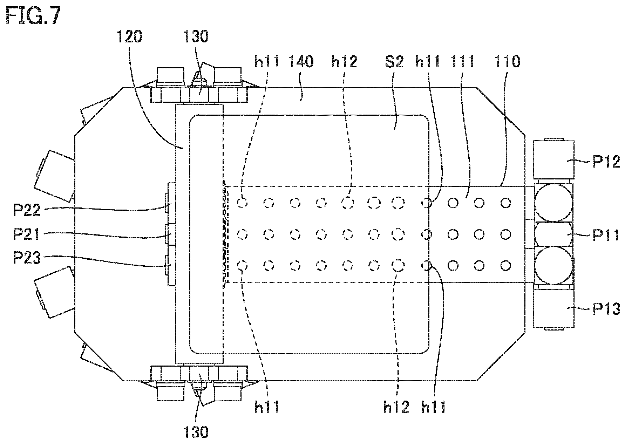

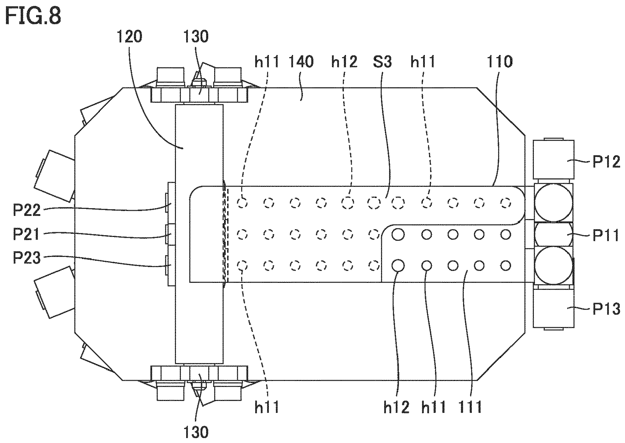

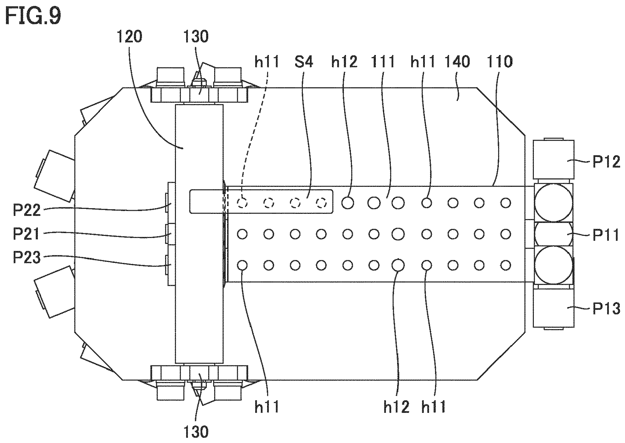

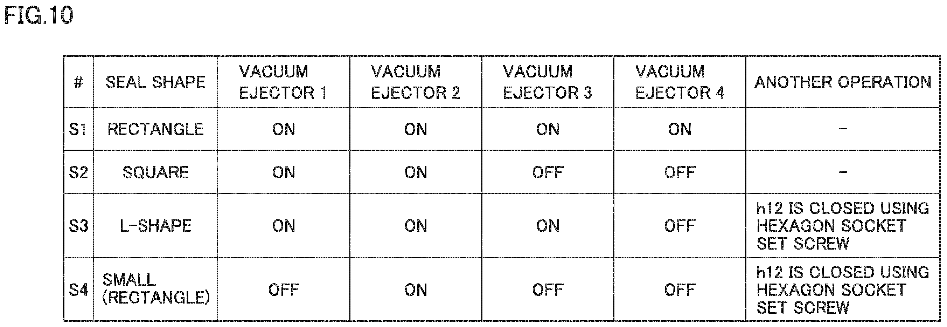

With reference to Figs. 6 to 10, as the first classification mode, the absorption state of seal S to absorption surface 111 by absorption hole h1 classified into first region SE1 to fourth region SE4 will be described below. Fig. 6 is a view illustrating a state in which a first seal S1 is absorbed to absorption surface 111, Fig. 7 is a view illustrating a state in which a second seal S2 is absorbed to absorption surface 111, Fig. 8 is a view illustrating a state in which a third seal S3 is absorbed to absorption surface 111, and Fig. 9 is a view illustrating a state in which a fourth seal S4 is affixed to absorption surface 111. Fig. 10 is a view illustrating the operation of each vacuum ejector 600 adapted to the shape of the seal in the first classification mode.

Referring to Figs. 6 and 10, first seal S1 has the rectangular shape. When first seal S1 is absorbed to absorption surface 111, a part (end) of first seal S1 overlaps pressing roller 120, and first seal S1 is absorbed in all the regions from first region SE1 to fourth region SE4. Consequently, the control starting (ON) all first to fourth vacuum ejectors 600 is executed.

Referring to Figs. 7 and 10, second seal S2 has a square shape. When second seal S2 is absorbed to absorption surface 111, similarly to first seal S1, a part (end) of second seal S2 overlaps pressing roller 120, and first seal S1 is absorbed in the regions of first region SE1 and second region SE2. Consequently, the control is performed to start (ON) first and second vacuum ejectors 600 and stop (OFF) third and fourth vacuum ejectors 600.

Referring to Figs. 8 and 10, third seal S3 has an L-shape. When third seal S3 is absorbed to absorption surface 111, similarly to first seal S1, a part (end) of third seal S3 overlaps pressing roller 120, and third seal S3 is absorbed in the regions of first region SE1 to third region SE3. Consequently, the control starting (ON) first to third vacuum ejectors 600 and stopping (OFF) fourth vacuum ejector 600 is executed. Furthermore, because absorption hole h12 provided in first region SE1 does not contribute to the absorption of third seal S3, preferably absorption hole h12 is closed using a screw (hexagon socket set screw).

Referring to Figs. 9 and 10, fourth seal S4 has a small rectangular shape. When fourth seal S4 is absorbed to absorption surface 111, similarly to first seal S1, a part (end) of fourth seal S4 overlaps pressing roller 120 and absorbs fourth seal S4 in the region of second region SE2. Consequently, the control starting (ON) second vacuum ejector 600 and stopping (OFF) first, third and fourth vacuum ejectors 600 is executed. Furthermore, because absorption holes h12 provided in first region SE1 and second region SE2 do not contribute to the absorption of fourth seal S4, preferably absorption hole h12 is closed using the screw (hexagon socket set screw).

### <F. Absorption state of seal: second classification mode>

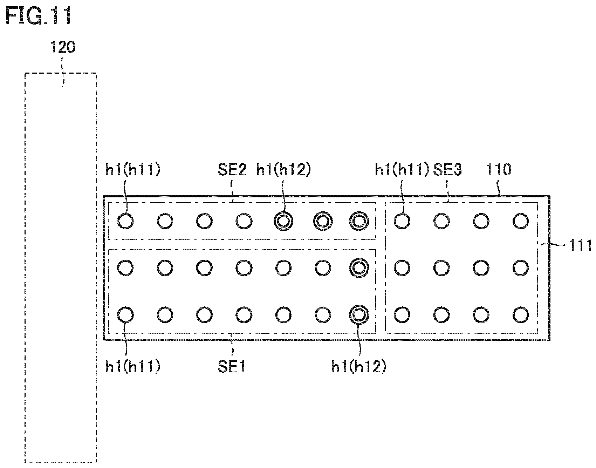

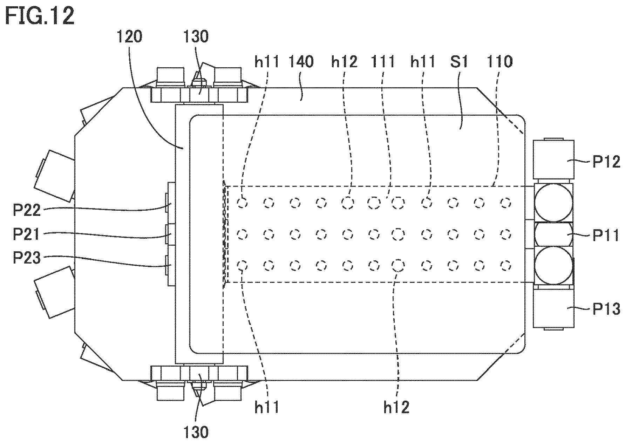

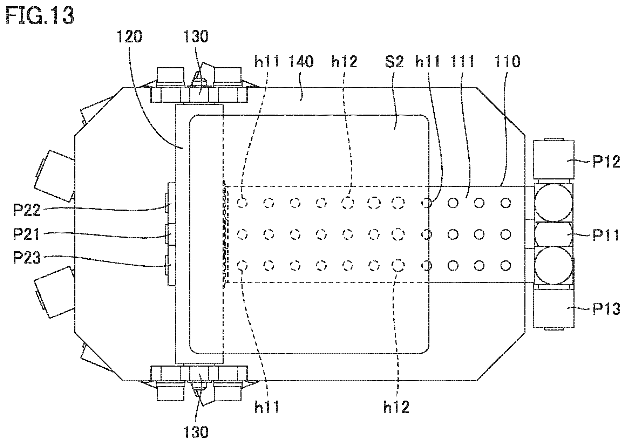

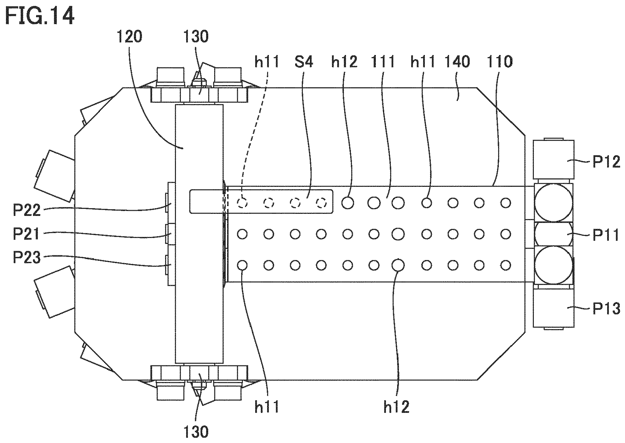

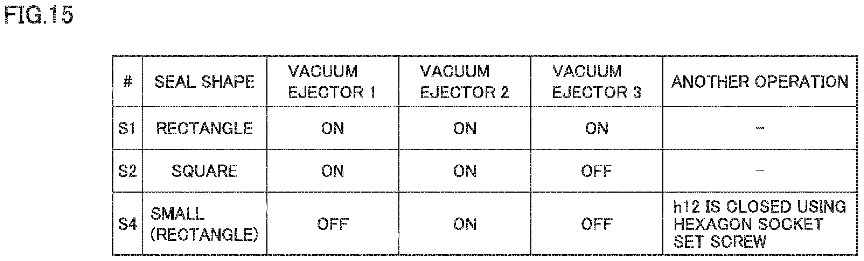

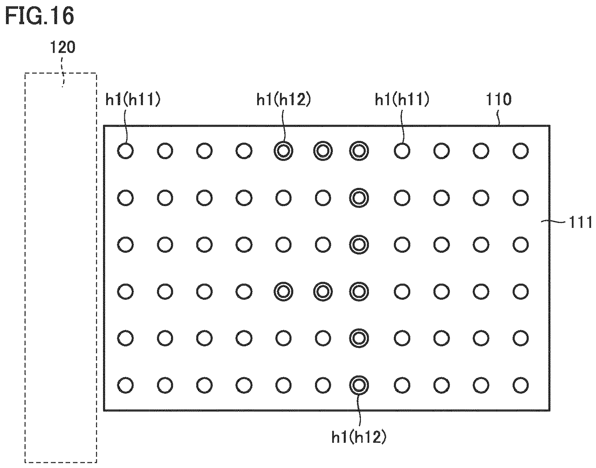

With reference to Figs. 11 to 16, the absorption state of seal S on absorption surface 111 by absorption hole h1 in a second classification mode different from the first classification mode will be described below. Fig. 11 is a view illustrating the second classification mode of absorption surface 111 of multi-hole absorption tool 110, Fig. 12 is a view illustrating a state in which first seal S1 is absorbed to absorption surface 111, Fig. 13 is a view illustrating a state in which second seal S2 is absorbed to absorption surface 111, Fig. 14 is a view illustrating a state in which fourth seal S4 is absorbed to absorption surface 111, Fig. 15 is a view illustrating the operation of each vacuum ejector adapted to the shape of seal S in the second classification mode, and Fig. 16 is a view illustrating arrangement of absorption holes of another embodiment.

First region SE1 is configured in (2 × 7) from a first column to a seventh column from the left in a second row and a third row, and first vacuum ejector 600 is coupled to 14 absorption holes h1 belonging to first region SE1 through suction port P21 and suction port P23. In first region SE1, absorption hole h12 in which the female screw (tap prepared hole) is provided is made at two positions in the seventh column.

Second region SE2 is formed in (1 × 7) from the first column to the seventh column from the left in the first row, and second vacuum ejector 600 is coupled to seven absorption holes h1 belonging to second region SE2 through suction port P22. In second region SE2, absorption holes h12 in which the female screw (tap prepared hole) is provided is made at three positions from the fifth row to the seventh row.

Third region SE3 is configured in (3 × 4) from the eight column to the eleventh column from the left in the first row and the third row, and third vacuum ejector 600 is coupled to 12 absorption holes h1 belonging to third region SE3 through suction port P11, suction port P12, and suction port P13.

Referring to Figs. 12 and 15, first seal S1 has the rectangular shape. When first seal S1 is absorbed to absorption surface 111, a part (end) of first seal S1 overlaps pressing roller 120, and first seal S1 is absorbed in all the regions from first region SE1 to fourth region SE4. Consequently, the control starting (ON) all first to third vacuum ejectors 600 is executed.

Referring to Figs. 13 and 15, second seal S2 has the square shape. When second seal S2 is absorbed to absorption surface 111, similarly to first seal S1, a part (end) of second seal S2 overlaps pressing roller 120, and first seal S1 is absorbed in the regions of first region SE1 and second region SE2. Consequently, the control is performed to start (ON) first and second vacuum ejectors 600 and stop (OFF) third vacuum ejector 600.

Referring to Figs. 14 and 15, fourth seal S4 has the small rectangular shape. When fourth seal S4 is absorbed to absorption surface 111, similarly to first seal S1, a part (end) of fourth seal S4 overlaps pressing roller 120 and absorbs fourth seal S4 in the region of second region SE2. Consequently, the control is performed to start (ON) second vacuum ejector 600 and stop (OFF) first and third vacuum ejectors 600. Furthermore, because absorption holes h12 provided in first region SE1 and second region SE2 do not contribute to the absorption of fourth seal S4, preferably absorption hole h12 is closed using the screw (hexagon socket set screw).

As described above, the case where absorption holes h1 of absorption surface 111 are classified into modes different from the first classification mode and the second classification mode has been described as an example. However, a large number of small absorption holes h1 are provided on absorption surface 111 to absorb the seal, whereby the generation of the wrinkle on the seal can be prevented.

Furthermore, each absorption hole h1 is classified into a plurality of regions, and the absorption state of each region is controlled by the individual vacuum ejector. Thus, on and off of the absorption can be switched for each region. As a result, absorption hole h1 can correspond to not only the rectangular and square seals but also seals of various shapes such as the L-shaped seal and the horizontally long seal. When the absorption hole other than the seal portion are also absorbed by the L-shaped seal or the like, the absorption holes are absorbed up to the mount, but the absorption of the mount can be prevented by partially switching the on and off of the absorption.

Furthermore, in the embodiment, absorption holes h12 in which a part of absorption holes h1 can be closed are used for the large number of absorption holes h1. However, absorption holes h12 in which all the absorption holes can be closed may be used. Thus, the absorption holes that should not absorb the seal can be closed according to the shape of the special seal. This makes it possible to further cope with the absorption of seals S having various shapes.

In addition, although absorption holes h1 of absorption surface 111 constitute a 3 × 11 type matrix, the arrangement of absorption holes h1 is not limited to this arrangement, and for example, as illustrated in Fig. 16, a 6 × 11 type matrix may be configured. In addition, the arrangement and classification mode of absorption holes h1 and the arrangement of absorption holes h12 whose opening is capable of being closed can be selected according to the shape of the absorbed seal.

### <G. Affixing of seal S by multi-hole absorption end effector 100>

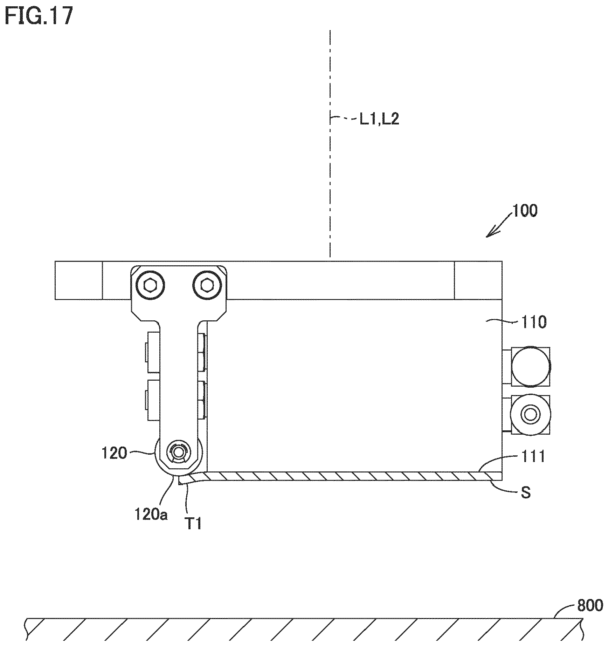

With reference to Figs. 17 to 20, a process of attaching seal S to an affixing object 800 by multi-hole absorption end effector 100 will be described below. Figs. 17 to 20 are views illustrating first to fourth affixing processes of affixing seal S to affixing object 800 using the multi-hole absorption end effector. In the drawing, an alternate long and short dash line L1 indicates a perpendicular to absorption surface 111 of multi-hole absorption tool 110, and an alternate long and short dash line L2 indicates a perpendicular to affixing object 800. Positioning control of multi-hole absorption end effector 100 is executed by seal affixing system 1.

Referring to Fig. 17, multi-hole absorption end effector 100 is positioned such that absorption surface 111 of multi-hole absorption tool 110 to which seal S is absorbed and the surface of affixing object 800 become a parallel position. In this state, seal S is absorbed to absorption surface 111 such that an end T1 of seal S overlaps pressing roller 120.

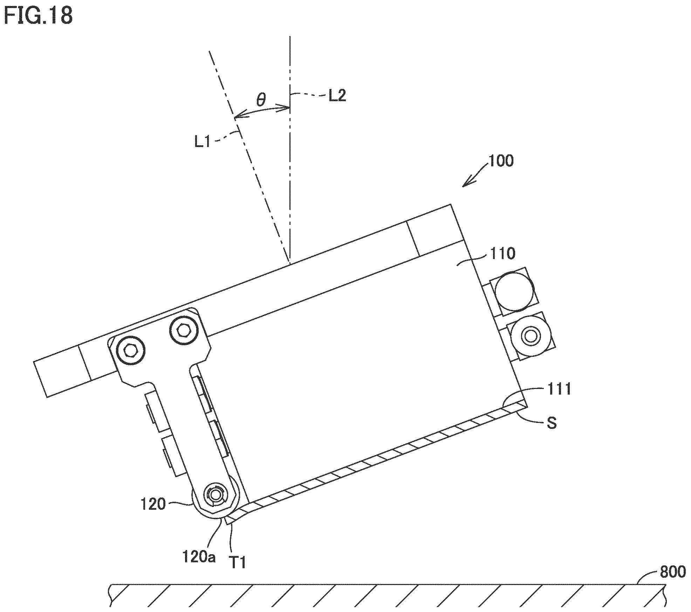

Referring to Fig. 18, multi-hole absorption end effector 100 is positioned such that the side of pressing roller 120 approaches the surface of affixing object 800 and such that absorption surface 111 of multi-hole absorption tool 110 is inclined by a predetermined angle (θ in the drawing).

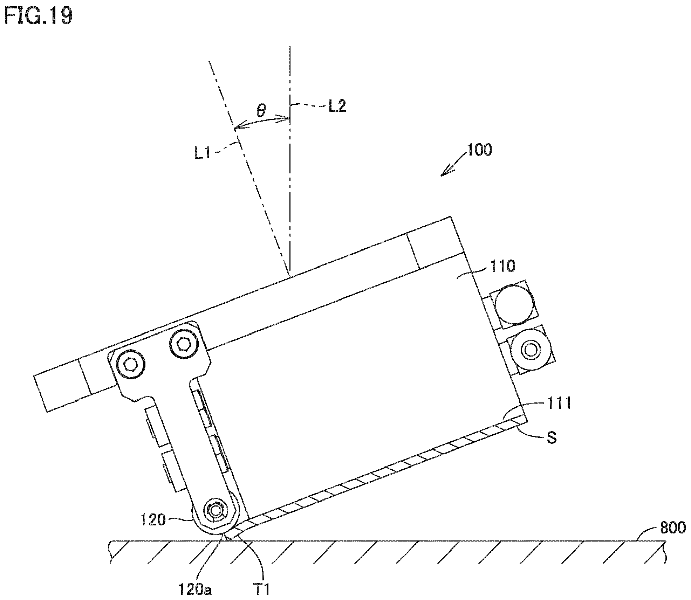

Referring to Fig. 19, multi-hole absorption end effector 100 is positioned such that absorption surface 111 descends to a position where end T1 of seal S overlapping pressing roller 120 abuts on the surface of affixing object 800.

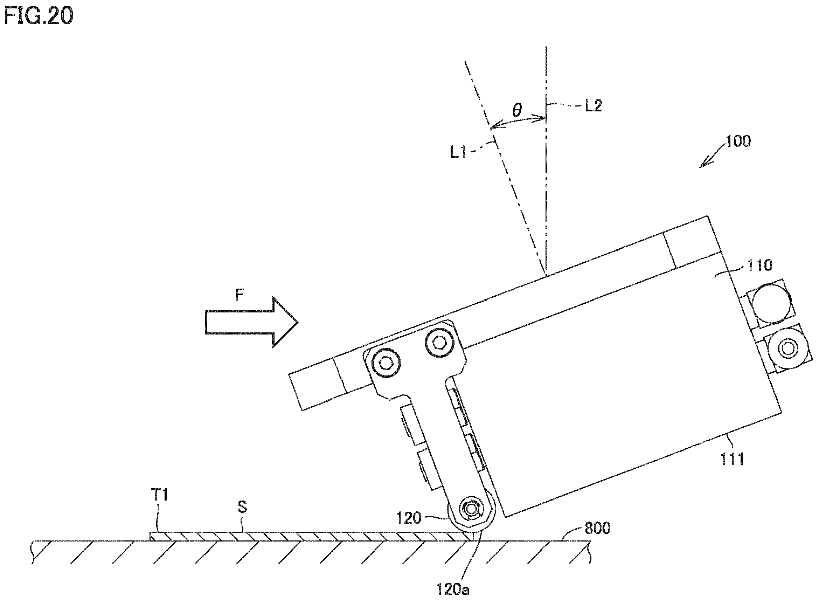

Referring to Fig. 20, multi-hole absorption end effector 100 is moved in parallel with the surface of affixing object 800 to affix seal S to the surface of the affixing object 800 while the suction force of seal S is controlled by vacuum ejector 600 and flow rate regulator 700 such that the suction force of seal S by absorption hole h1 becomes smaller than the adhesive force of seal S. At this point, seal S is affixed to the surface of affixing object 800 while pressed by pressing roller 120, so that the generation of the wrinkle is prevented and seal S is affixed to affixing object 800.

### <H. Appendix>

The above embodiment includes the following technical ideas.

### [Configuration 1]

A multi-hole absorption tool (110) including an absorption surface (111) including a plurality of absorption holes (h1) to which a seal (S) is absorbed,
wherein the plurality of absorption holes (h1) are classified so as to belong to at least a first region (SE1) and a second region (SE2), and
absorption holes (h1) belonging to the first region (SE1) and absorption holes (h1) belonging to the second region (SE2) are connected to different suction devices (600).

### [Configuration 2]

The multi-hole absorption tool according to configuration 1, in which an opening of a part of the plurality of absorption holes (h1) is capable of being closed.

### [Configuration 3]

The multi-hole absorption tool according to configuration 1 or 2, further including a pressing roller (120) disposed near the absorption surface (111), the pressing roller (120) being configured to press the seal (S) to affix the seal (S) to an object (800) when the seal (S) absorbed by the absorption surface (111) is affixed to the object (800).

### [Configuration 4]

The multi-hole absorption tool according to any one of configurations 1 to 3, wherein the pressing roller (120) is provided so as to protrude from the absorption surface (111) by a predetermined distance (X).

### <I. Advantages>

According to multi-hole absorption tool 110 of the embodiment, the seal S can be peeled off from the seal mount 25 without wrinkling the seal S, prevent the positional displacement of the seal S with respect to the affixing object 800 to which the seal is affixed, and affix the seal to the affixing object 800 to which the seal is affixed.

Although the embodiment of the present invention has been described, it should be considered that the disclosed embodiment is an example in all respects and not restrictive. The scope of the present invention is indicated by the claims, and it is intended that all modifications within the meaning and scope equivalent to the claims are included in the present invention.

## Claims

1. A multi-hole absorption tool (110) comprising an absorption surface (111) including a plurality of absorption holes (h1) to which a seal (S) is absorbed,
wherein each of the plurality of absorption holes (h1) is classified so as to belong to at least one of a first region (SE1) and a second region (SE2), and
absorption holes (h1) belonging to the first region (SE1) and absorption holes (h1) belonging to the second region (SE2) are connected to different suction devices (600).

2. The multi-hole absorption tool according to claim 1, wherein an opening of a part of the plurality of absorption holes (h1) is capable of being closed.

3. The multi-hole absorption tool according to claim 1 or 2, further comprising a pressing roller (120) disposed near the absorption surface (111), the pressing roller (120) being configured to press the seal (S) to affix the seal (S) to an object (800) when the seal (S) absorbed by the absorption surface (111) is affixed to the object (800).

4. The multi-hole absorption tool according to claim 3, wherein the pressing roller (120) is provided so as to protrude from the absorption surface (111) by a predetermined distance.
